# EUROPÄISCHE PATENTSCHRIFT

(11) **EP 0 735 191 B1**
(45) Veröffentlichungstag und Bekanntmachung des Hinweises auf die Patenterteilung: **21.02.2001**
(21) Anmeldenummer: 96103511.0
(22) Anmeldetag: 07.03.1996
(51) Int. Cl.: E01C 19/48

(54) **Fertiger für Strassendecken mit Reifenfahrwerk**
Rubber-tyred wheel-mounted road-paver-finisher
Finisseur avec mécanisme de déplacement à pneus

(30) Priorität: 31.03.1995 DE 19513192
(43) Veröffentlichungstag der Anmeldung: 02.10.1996
(73) Patentinhaber: Svedala Strassenfertiger GmbH, 49811 Lingen/Ems (DE)
(72) Erfinder: Bächle, Hans-Dieter, Ing. (grad), 31855 Aerzen (DE)
(74) Vertreter: Flaig, Siegfried, Dipl.-Ing.

(56) Entgegenhaltungen:
- DE-A- 3 611 268
- DE-A- 3 911 229
- DE-A- 4 134 840
- DE-A- 4 138 076

## Beschreibung

Die Erfindung betrifft einen Fertiger für Straßendecken mit Reifenfahrwerk, mit einem Chassis, das in Fahrtrichtung vorne einen Gutbehälter und hinten eine Querverteileinrichtung mit Einbaubohle trägt, ferner mit einem Primärantriebsaggregat, das einen Verbrennungsmotor und zumindest eine Hauptpumpe umfaßt, die hydraulische Sekundärantriebe der lenkbaren Vorderräder und der Hinterräder antreibt und die Vorderräder mittels hydraulischer Vorderradmotoren antreibbar sind.

Ein derartiger Fertiger für Straßendecken ist aus DE-A-3611268 bekannt.

Weiter ist aus DE-A-4134840 ein Straßendecken-Fertiger mit Reifenfahrwerk bekannt der ein zentrales Antriebsmotor-Pumpenaggregat, lenkbare Vorderräder und getriebene Hinterräder aufweist, wobei die Hinterrad-Antriebseinrichtung hydraulisch wirkt. Diese hydraulische Hinterrad-Antriebseinrichtung besitzt einen Hydroverstellmotor mit einem Schaltgetriebe, das zwischen extrem langsamer Arbeitsfahrt und schneller Transportfahrt umschaltbar ist. Dabei werden die Hinterräder über jeweils eine hydraulische Antriebseinheit pro Hinterrad verbunden, die beide an eine Hydraulikpumpe angeschlossen sind.

Die bekannte Bauweise erfordert demzufolge an den Hinterrädern jeweils eine hydraulische Antriebseinheit, die aus einem Hydroverstellmotor, einem Planetenrad-Schaltgetriebe, einem Reduktionsgetriebe-Abschnitt besteht und in einem Getriebegehäuse und in einem Innengetriebegehäuse untergebracht sind. Diese Bauweise beschränkt sich daher auf die Hinterräder und erfordert ähnliche Maßnahmen für den Antrieb der Vorderräder. Die bekannte Bauweise ist daher den praktischen Bedingungen des Schlupfes bei entsprechendem Untergrund unterworfen, was u.a. nachteilig ist.

Der vorliegenden Erfindung liegt die Aufgabe zugrunde, das bekannte Antriebssystem zu verbessern, d.h. dahingehend zu vereinfachen, daß die Antriebstechnik der Hinterräder mit derjenigen der Vorderräder verknüpft werden kann, wodurch ein geringerer Schlupf erzielt werden soll.

Die gestellte Aufgabe wird erfindungsgemäß dadurch gelöst, daß die Hinterräder jeweils mittels eines Hauptantriebs angetrieben sind, der aus einem hydraulischen Transportmotor und einem hydraulischen Arbeitsmotor besteht und daß der hydraulische Hauptantrieb der Hinterräder und die hydraulischen Vorderradmotoren durch eine einzige gemeinsame Fahrpumpe pro Spurseite, die durch das Primäraggregat angetrieben ist, gespeist sind. Der Vorteil liegt in einer Vereinfachung des Hydrauliksystems und z.B. in der Ersparnis an Pumpen und Pumpenaggregaten. Im übrigen gewährleistet die Erfindung einen geringeren Schlupf im Hinblick auf die Verteilung der Antriebskräfte auf Hinterräder und Vorderräder.

Als Folge der Verknüpfung des hydraulischen Kreises für die Vorderräder mit dem hydraulischen Kreis der Hinterräder wird vorgeschlagen, daß während des Einbauvorgangs der als Verstellmotor ausgebildete Transportmotor des Hauptantriebs für die Hinterräder als Rotationsmengenteiler für die Vorderradmotoren einsetzbar ist. Den einzelnen Aggregaten werden daher zeitabhängig unterschiedliche Aufgaben zugeteilt, was zu einer Ersparnis an Einrichtungselementen und zu den angegebenen Vorteilen führt.

Eine Weiterentwicklung der Erfindung besteht deshalb darin, daß außerhalb des Einbauvorgangs für Schnellfahrt die hydraulischen Vorderradmotoren und die an den Hinterrädern angeordneten hydraulischen Arbeitsmotoren des Hauptantriebs abgeschaltet sind und daß der Transportmotor des Hauptantriebs als Bewegungsantrieb einschaltbar ist. Dieser Vorteil wird im Grunde genommen durch den Gedanken, den Hauptantrieb in einen hydraulischen Transport- und einen hydraulischen Arbeitsmotor zu trennen, erzielt.

Nach weiteren Merkmalen ist vorgesehen, daß in der äußeren Nabe der Hinterräder jeweils ein Planetengetriebe angeflanscht ist, das durch eine Kupplung mit dem hydraulischen Transportmotor des Hauptantriebs verbunden ist. Diese Maßnahme ermöglicht über eine groß übersetzte Getriebestufe die höhere Geschwindigkeit bei der Transportbewegung.

Nach einer anderen Weiterentwicklung wird vorgeschlagen, daß das Primärantriebsaggregat auf einer Querachse zur Fahrtrichtung liegt und daß auf der Querachse für die linke und rechte Seite des Fertigers jeweils eine erste Pumpe für den Fahrbetrieb mit zugehörigem Steuerventil, eine zweite Pumpe für den Schneckenantrieb der Querverteileinrichtung mit zugehörigem Steuerventil und eine dritte Pumpe für einen Stampfer mit zugehörigem Steuerventil angeordnet sind. Nach der sich daraus ergebenden sehr übersichtlichen Anordnung der Pumpen und Ventile wird eine günstige Lastverteilung des Gewichtes des Primärantriebsaggregates erzielt. Dadurch wird nicht nur eine günstige Raumaufteilung geschaffen, sondern auch eine systematische Verlegungsmöglichkeit für alle Hydraulikleitungen mit entsprechender Abfolge und den entsprechenden Anschlüssen zu einem jeweiligen Aggregat.

Ausgestaltungsmöglichkeiten ergeben sich ferner dadurch, daß die ersten, zweiten und dritten Pumpen jeweils achssymmetrisch zu einer Fahrzeugmittellängsachse und quer auf der jeweiligen Spurseite der Vorder- und Hinterräder angeordnet sind. Dadurch wird eine günstige Gewichtsverteilung erzielt, was ebenfalls den Schlupf verkleinert und insbesondere bei niedrigen Drehzahlen von Vorteil ist.

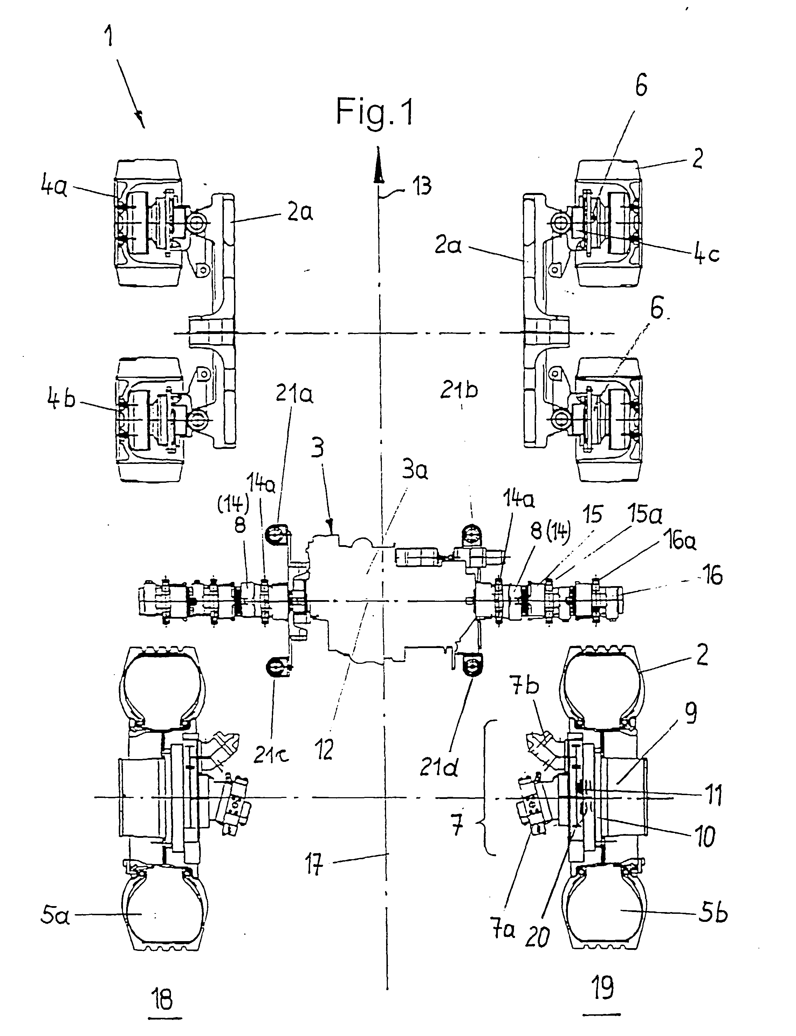

Ein Ausführungsbeispiel der Erfindung ist in der Zeichnung dargestellt und wird im folgenden näher beschrieben. Es zeigen
- Fig. 1: eine Antriebsanordnung der Vorder- und Hinterräder in Draufsicht und
- Fig. 2: eine grundsätzliche Schaltung des Hydraulikkreises für den in Fig. 1 dargestellten Fertiger.

Der Fertiger 1 weist an einem nicht näher dargestellten Chassis ein Reifenfahrwerk 2 auf. Das Chassis trägt in Fahrtrichtung 13 vorne einen Gutbehälter und hinten eine Querverstelleinrichtung mit einer Förderschnecke sowie einer Einbaubohle. Der Fertiger 1 wird mittels eines Primärantriebsaggregates 3, das aus einem Verbrennungsmotor 3a (Dieselmotor) besteht, mit Energie versorgt. An einer Aufhängung 2a sind jeweils Vorderräderpaare 4a und 4b drehbar und lenkbar gelagert. Am Chassis sind außerdem Hinterräder 5a und 5b angeordnet.

Jedes Vorderrad 4a, 4b trägt einen Vorderradmotor 6, der in das Innere des Reifens mit Felge und Vorderradnabe 4c eingebaut ist.

Das Primärantriebsaggregat 3 umfaßt in der Regel eine noch näher zu beschreibende Hauptpumpe (Fahrpumpe 8). In diesem Fall stellen die Vorderradmotoren 6 die erwähnten Sekundärantriebe dar.

Währenddem die Vorderräder 4a, 4b mittels hydraulischer Vorderradmotoren 6 antreibbar sind, werden die Hinterräder 5a, 5b jeweils mittels eines hydraulischen Hauptantriebs 7 angetrieben, der aus einem hydraulischen Transportmotor 7a und aus einem hydraulischen Arbeitsmotor 7b besteht.

Der hydraulische Hauptantrieb 7 der Hinterräder 5a, 5b und die hydraulischen Vorderradmotoren 6 werden durch eine einzige gemeinsame Fahrpumpe 8 gespeist, die durch das Primärantriebsaggregat 3 angetrieben wird.

Der Hauptantrieb 7 kann nunmehr mit dem Transportmotor 7a und dem Arbeitsmotor 7b in verschiedenen Funktionen arbeiten: Während des Einbauvorgangs der Straßendecke ist der als Verstellmotor (Axialkolbenmotor) ausgebildete Transportmotor 7a des Hauptantriebs 7 für die Hinterräder 5a, 5b als Rotationsmengenteiler für die Vorderradmotore 6 einschaltbar. Außerhalb des Einbauvorgangs sind die hydraulischen Vorderradmotoren 6 und die an den Hinterrädern 5a, 5b angeordneten hydraulischen Arbeitsmotoren 7b des Hauptantriebs 7 abgeschaltet. Während der Transportfahrt ist der Transportmotor 7a des Hauptantriebs 7 als Bewegungsantrieb eingeschaltet und treibt den ganzen Fertiger 1.

In einer Nabe 9 der Hinterräder 5a, 5b ist ein Planetengetriebe 10 angeflanscht, das durch eine Kupplung 11 mit dem hydraulischen Transportmotor 7a des Hauptantriebs 7 verbindbar oder wieder abkuppelbar ist. Zwischen der Kupplung 11 und dem Arbeitsmotor 7b bzw. dem Transportmotor 7a ist zumindest eine weitere Getriebestufe 20 eines Zahnradgetriebes angeordnet.

Das Primärantriebsaggregat 3 liegt auf einer Querachse 12 zur Fahrtrichtung 13. Auf dieser Querachse 12 sind für die linke und rechte Seite des Fertigers 1 jeweils eine erste Pumpe 14 für den Fahrbetrieb mit zugehörigem Steuerventil 14a, eine zweite Pumpe 15 für den Schneckenantrieb der Querverteileinrichtung mit zugehörigem Steuerventil 15a und eine dritte Pumpe 16 für einen Stampfer oder Rüttler mit zugehörigem Steuerventil 16a angeordnet. Diese Reihenfolge der Paarungen Pumpe/Steuerventil kann unterschiedlich sein.

Die erste, zweite und dritte Pumpe 14, 15 und 16 sind jeweils achssymmetrisch zu einer Fahrzeugmittellängsachse 17 und quer auf der jeweiligen Spurseite 18 und 19 der Vorder- und Hinterräder 4a, 4b; 5a, 5b angeordnet. Die gesamte Einheit des Dieselmotors mit den beidseitigen Pumpen- und Steuervorrichtungen ist an Motoraufhängungen 21a, 21b, 21c und 21d gelagert.

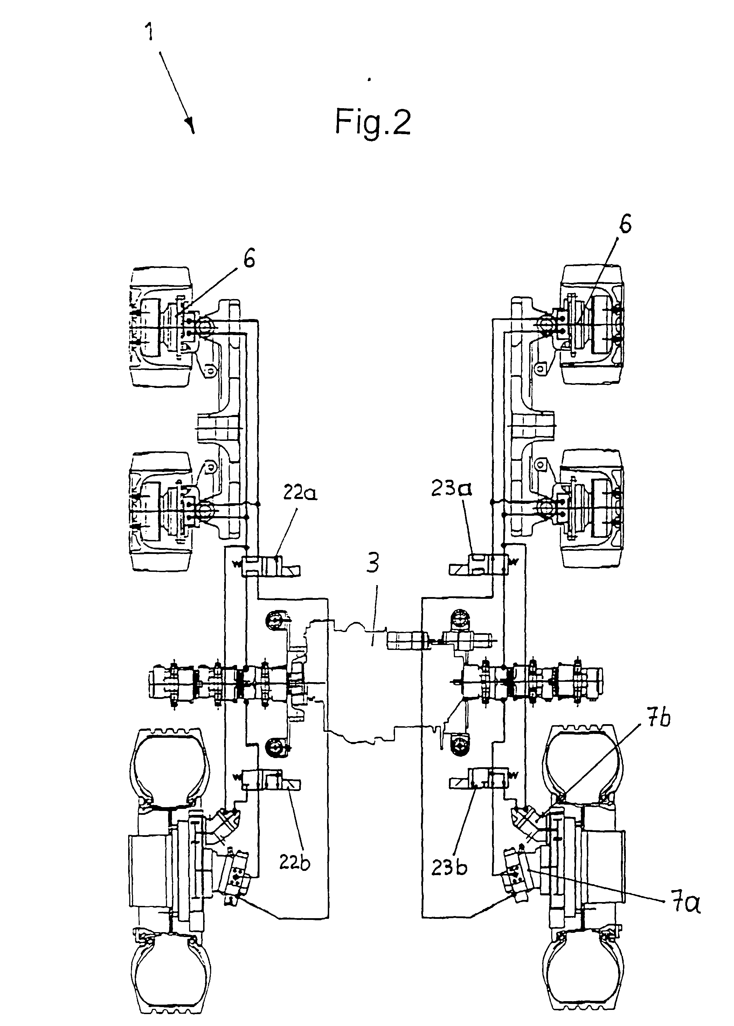

Gemäß Fig.2 ist die hydraulische Verschaltung der Vorderradmotoren 6 über die Fahrpumpe 8, mit dem Transportmotor 7a und dem Arbeitsmotor 7b gezeigt.

Auf der linken Seite ist die Schaltung im Zustand "Transport" dargestellt. Von der Fahrpumpe 8 ausgehend sind die hydraulischen Verbindungen über ein vorderes Zusatzventil 22a (Elektromagnetwegeventil) und ein hinteres Zusatzventil 22b derart geschaltet, daß bei Transportfahrt das hintere Zusatzventil 22b nur den Transportmotor 7a zur Fahrpumpe 8 freischaltet, jedoch den Arbeitsmotor 7b abschaltet.

Auf der rechten Seite ist die Schaltung im Zustand "Einbau" gezeigt. Die Fahrpumpe 8 ist durch das rechte vordere Zusatzventil 23a (Elektromagnetwegeventil) mit den Vorderradmotoren 6 verbunden. Das hintere Zusatzventil 23b schaltet den Transportmotor 7a ab und schaltet den Arbeitsmotor 7b ein.

### Bezugszeichenliste

- 1: Fertiger
- 2: Reifenfahrwerk
- 2a: Aufhängung
- 3: Primärantriebsaggregat
- 3a: Verbrennungsmotor
- 4a: Vorderrad
- 4b: Vorderrad
- 4c: Vorderradnabe
- 5a: Hinterrad
- 5b: Hinterrad
- 6: Vorderradmotor
- 7: Hauptantrieb
- 7a: hydraulischer Transportmotor
- 7b: hydraulischer Arbeitsmotor
- 8: Fahrpumpe
- 9: Nabe der Hinterräder
- 10: Planetengetriebe
- 11: Kupplung
- 12: Querachse
- 13: Fahrtrichtung
- 14: erste Pumpe
- 14a: Steuerventil
- 15: zweite Pumpe
- 15a: Steuerventil
- 16: dritte Pumpe
- 16a: Steuerventil
- 17: Fahrzeugmittellängsachse
- 18: Spurseite
- 19: Spurseite
- 20: Getriebestufe
- 21a: Motoraufhängung
- 21b: Motoraufhängung
- 21c: Motoraufhängung
- 21d: Motoraufhängung

## Patentansprüche

1. Fertiger (1) für Straßendecken mit Reifenfahrwerk (2), mit einem Chassis, das in Fahrtrichtung (13) vorne einen Gutbehälter und hinten eine Querverteileinrichtung mit Einbaubohle trägt, ferner mit einem Primärantriebsaggregat (3), das einen Verbrennungsmotor (3a) und zumindest eine Hauptpumpe umfaßt, die hydraulische Sekundärantriebe der lenkbaren Vorderräder (4a, 4b) und der Hinterräder (5a, 5b) antreibt und die Vorderräder (4a, 4b) mittels hydraulischer Vorderradmotoren (6) antreibbar sind,
dadurch gekennzeichnet,
daß die Hinterräder (5a, 5b) jeweils mittels eines Hauptantriebs (7) angetrieben sind, der aus einem hydraulischen Transportmotor (7a) und einem hydraulischen Arbeitsmotor (7b) besteht und daß der hydraulische Hauptantrieb (7) der Hinterräder (5a, 5b) und die hydraulischen Vorderradmotoren (4a, 4b) durch eine einzige gemeinsame Fahrpumpe (8) pro Spurseite (18, 19), die durch das Primärantriebsaggregat (3) angetrieben ist, gespeist sind.

2. Fertiger nach Anspruch 1,
dadurch gekennzeichnet,
daß während des Einbauvorgangs der als Verstellmotor ausgebildete Transportmotor (7a) des Hauptantriebs (7) für die Hinterräder (5a, 5b) als Rotationsmengenteiler für die Vorderradmotoren (6) einsetzbar ist.

3. Fertiger nach einem der Ansprüche 1 oder 2,
dadurch gekennzeichnet,
daß außerhalb des Einbauvorgangs für Schnellfahrt die hydraulischen Vorderradmotoren (6) und die an den Hinterrädern (5a, 5b) angeordneten hydraulischen Arbeitsmotoren (7b) des Hauptantriebs (7) abgeschaltet sind und daß der Transportmotor (7a) des Hauptantriebs (7) als Bewegungsantrieb einschaltbar ist.

4. Fertiger nach einem der Anspüche 1 bis 3,
dadurch gekennzeichnet,
daß in der äußeren Nabe (9) der Hinterräder (5a, 5b) jeweils ein Planetengetriebe (10) angeflanscht ist, das durch eine Kupplung (11) mit dem hydraulischen Transportmotor (7a) des Hauptantriebs (7) verbunden ist.

5. Fertiger nach einem der Ansprüche 1 bis 4,
dadurch gekennzeichnet,
daß das Primärantriebsaggregat (3) auf einer Querachse (12) zur Fahrtrichtung (13) liegt und daß auf der Querachse (12) für die linke und rechte Seite des Fertigers (1) jeweils eine erste Pumpe (14) für den Fahrbetrieb mit zugehörigem Steuerventil (14a), eine zweite Pumpe (15) für den Schneckenantrieb der Querverteileinrichtung mit zugehörigem Steuerventil (15a) und eine dritte Pumpe (16) für einen Stampfer mit zugehörigem Steuerventil (16a) angeordnet sind.

6. Fertiger nach Anspruch 5,
dadurch gekennzeichnet,
daß die ersten, zweiten und dritten Pumpen (14, 15, 16) jeweils achssymmetrisch zu einer Fahrzeugmittellängsachse (17) und quer auf der jeweiligen Spurseite (18, 19) der Vorder- und Hinterräder (4a, 4b; 5a, 5b) angeordnet sind.

## Claims

1. A finisher (1) for road surfaces with a tire drive (2) and a chassis that carries a material bin in the front and, in the rear, a transverse spreading device with an installation beam; a primary drive unit (3) which includes an internal combustion engine (3a) and at least one main pump, which drives hydraulic secondary drives of steerable front wheels (4a, 4b) and of rear wheels (5a, 5b), is also mounted on the chassis; the front wheels (4a, 4b) are driven by hydraulic front wheel motors (6) , characterized in that , the rear wheels (5a, 5b), respectively, are driven by a master drive (7) that includes an hydraulic transport motor (7a) and a hydraulic working motor (7b) ; the hydraulic master drive (7) of the rear wheels (5a, 5b) and the hydraulic front wheel motors (4a, 4b) are fed by a single shared drive pump (8) for each track side (18,19) which is driven by the primary drive unit (3).

2. A finisher as in claim 1, wherein each of the transport motors (7a) is an adjustment motor (7a) , the circuit means connecting each adjustment motor (7a) to at least one of the front wheel motors (4a, 4b) in a first operational phase so that the adjustment motor (7a) is operative as a rotational volume distributor for the at least one of the front wheel motors (4a, 4b) for a slow-speed road surface finishing operations.

3. A finisher as in claim 1 or 2, wherein the circuit means is operative to disconnect the hydraulic front wheel motors (6) and the hydraulic working motors (7b) of the master drive (7) in a second operational phase for high-speed driving, the transport motors (7a) of the master drive (7) being operative as a transport drive in the second phase.

4. A finisher as in claim 1 to 3, wherein each of the rear wheels (5a, 5b) has an outer hub (9), and further comprising a separate planetary gear unit (10) flange-mounted to the outer hub (9) of each of the rear wheels (5a, 5b), respectively, and coupling means (11) for connecting each planetary gear unit (10) to one of the hydraulic transport motors (7a) of the master drive (7).

5. A finisher as in claim 1 to 4, wherein the primary drive means (3) lies transverse to a direction of travel (13) of the chassis, and further comprising, for a left-hand side and a right-hand side of the chassis, respectively, a transverse spreading device having a worm drive and being mounted on the chassis, a rammer mounted on the chassis, first pump means (14) and an associated control valve (14a) for driving the front and rear wheels (4a, 4b; 5a,5b), second pump means (15) and an associated control valve (15a) for the worm drive of the transverse spreading device, and third pump means (16) and an associated valve (16a) for the rammer, the first, second and third pump means (14, 15, 16) being arranged on the transverse axis (12).

6. A finisher as in claim 5, wherein the first, second and third pump means (14, 15, 16), respectively, are arranged in an axis-symmetrical fashion relative to a central longitudinal axis (17) of the chassis and crosswise on respective track sides (18, 19) of the front and rear wheels ( 4a, 4b; 5a, 5b).

## Revendications

1. Paveur-finisseur de routes (1) avec train de roulement à pneus (2), avec un châssis portant une trémie à l'avant, dans le sens de la marche (13), et à l'arrière un groupe de gabarit avec vis, et comprenant encore un groupe d'entraînement primaire (3) comportant un moteur à combustion interne (3a) et au moins une pompe principale qui entraîne des dispositifs de transmission secondaires des roues avant directrices (4a, 4b) et des roues arrière (5a, 5b), les roues avant (4a, 4b) pouvant être entraînées au moyen de moteurs de roues avant hydrauliques (6), caractérisé en ce que les roues arrière (5a, 5b) sont entraînées chacune par une commande principale (7) se composant d'un moteur de transport hydraulique (7a) et d'un moteur de travail hydraulique (7b), et en ce que la commande principale hydraulique (7) des roues arrière (5a, 5b) et les moteurs hydrauliques des roues avant (4a, 4b) sont alimentés par une seule pompe de marche (8) commune par côté de roulement (18, 19), pompe qui est entraînée par le groupe d'entraînement primaire (3).

2. Paveur-finisseur selon la revendication 1, caractérisé en ce que pendant la pose du revêtement, le moteur de transport (7a) de la commande principale (7) des roues arrière (5a, 5b), conçu comme servo-moteur, est utilisable comme diviseur de débit de rotation pour les moteurs de roues avant (6).

3. Paveur-finisseur selon l'une des revendications 1 ou 2, caractérisé en ce qu'en dehors de la pose du revêtement, pour l'avance rapide, les moteurs hydrauliques de roues avant (6) et les moteurs de travail hydrauliques (7b) de la commande principale (7) disposés au niveau des roues arrière (5a, 5b) sont mis à l'arrêt et en ce que le moteur de transport (7a) de la commande principale (7) peut être enclenché pour l'avance.

4. Paveur-finisseur selon l'une des revendications 1 à 3, caractérisé en ce qu'on a fixé par brides, dans le moyeu extérieur (9) de chacune des roues arrière (5a, 5b), un engrenage planétaire (10) qui est raccordé par un accouplement (11) au moteur de transport hydraulique (7a) de la commande principale (7).

5. Paveur-finisseur selon l'une des revendications 1 à 4, caractérisé en ce que le groupe d'entraînement primaire (3) se situe sur un axe transversal (12) au sens de la marche (13) et en ce qu'on a placé sur l'axe transversal (12), pour les côtés gauche et droit du paveur-finisseur (1), une première pompe (14) pour le déplacement, avec une vanne pilote associée (14a), une deuxième pompe (15) pour l'entraînement de la vis sans fin du groupe de gabarit, avec une vanne pilote associée (15a), et une troisième pompe (16) pour un pilon, avec vanne pilote associée (16a).

6. Paveur-finisseur selon la revendication 5, caractérisé en ce que les première, deuxième et troisième pompes (14, 15, 16) sont placés symétriquement à un axe longitudinal médian (17) du véhicule et transversalement sur le côté de roulement respectif (18, 19) des roues avant et arrière (4a, 4b; 5a, 5b).
